Europäisches Patentamt

European Patent Office

Office européen des brevets

(19)

(11) Veröffentlichungsnummer: **0 261 562 B1**

# EUROPÄISCHE PATENTSCHRIFT

(12)

(45) Veröffentlichungstag der Patentschrift: **24.07.91**

(51) Int. Cl.⁵: **G21C 17/06**

(21) Anmeldenummer: **87113507.5**

(22) Anmeldetag: **16.09.87**

(54) **Einrichtung zur Inspektion eines Kernreaktor-Brennelementes.**

(30) Priorität: **20.09.86 DE 3632061**

(43) Veröffentlichungstag der Anmeldung:
**30.03.88 Patentblatt 88/13**

(45) Bekanntmachung des Hinweises auf die
Patenterteilung:
**24.07.91 Patentblatt 91/30**

(84) Benannte Vertragsstaaten:
**BE CH DE ES FR IT LI NL SE**

(56) Entgegenhaltungen:
**EP-A- 0 137 077**
**EP-A- 0 164 510**

(73) Patentinhaber: **ABB Reaktor GmbH**
**Dudenstrasse 44**
**W-6800 Mannheim 1(DE)**

(72) Erfinder: **Scharpenberg, Rainer, Dipl.-Ing.**
**Im Krappenklingen**
**W-6948 Wald-Michelbach(DE)**
Erfinder: **Heckhausen, Hermann-Josef,**
**Dipl.-Ing.**
**Huegelstrasse 35**
**W-6940 Weinheim(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**W-6800 Mannheim 1(DE)**

Rank Xerox (UK) Business Services

## Beschreibung

Die Erfindung betrifft eine Einrichtung zur Inspektion eines Kernreaktor-Brennelementes mit einem in die Räume zwischen den Brennstäben einfahrbaren, von einer Sonde getragenen Ultraschallprüfkopf und mit einem in einem wassergefüllten Becken angeordneten, gekapselten Gehäuse zur Aufnahme eines Hebeltriebes zur Bewegung der außerhalb des Gehäuses angeordneten Sonde, wobei eine Drehdurchführung eine Wand des Gehäuses durchdringt, die an ihrem außerhalb des Gehäuses angeordneten Ende mit einem Hebelgestänge versehen ist, das einen Träger zur Aufnahme der Sonde aufweist.

Eine derartige Einrichtung ist aus der DE-OS 33 37 084 bekannt.

Dort soll die mit einem Ultraschallprüfkopf ausgestattete Sonde nur an einer Position und zwar im unteren Endbereich des Brennelementes in die Räume zwischen den

Brennstäben eingefahren werden. Dazu durchdringt die Drehdurchführung die Unterseite des in Höhe des Brennelementfußes abgestellten Gehäuses und trägt über ein Hebelgestänge die Sonde.

Von Seiten der Betreiber von Kernkraftwerken stellt sich nunmehr die Forderung, die Brennstäbe nicht nur an einer Stelle sonderen auf mehreren Ebenen auf Wassereinschluß zu prüfen. Aus der DE-OS 34 19 765 ist es zwar bekannt eine Sonde in vertikaler Richtung zu verfahren um die Brennstäbe in mehreren Ebenen nacheinander prüfen zu können. Dazu ist ein Antriebssystem erforderlich, das die vertikale Bewegung der Sonden über eine Brennelementlänge von ca. 4 Metern ermöglicht. Neben dem aufwendigen Antrieb erfordert die Vertikalbewegung in dem wassergefüllten Becken einen großen Zeitaufwand, der noch durch das schrittweise Prüfen in mehreren Ebenen erhöht wird. Da die Prüfung der Brennelemente nur bei abgeschaltetem Reaktor erfolgt, geht die Prüfzeit an der Verfügbarkeit des Kernkraftwerkes verloren.

Es soll daher eine Einrichtung gefunden werden, die eine gleichzeitige Prüfung auf mehreren Ebenen bei reduziertem Zeitaufwand ermöglicht.

Gelöst wird diese Aufgabe erfindungsgemäß dadurch, daß die Drehdurchführung das Gehäuse in Richtung der Wasseroberfläche des Beckens durchsetzt, daß von dem in das Wasser ragenden Teil der Drehdurchführung zwei in verschiedenen Höhen angeordnete Hebelgestänge auskragen, daß der Träger eine Traverse ist, die den freien Enden der Hebelgestänge zugeordnete Tragplatten miteinander verbindet und daß der Träger mehrere auf verschiedenen Ebenen angeordnete Sonden aufnimmt. Durch die Anordnung von mehreren Sonden an der von zwei Hebelgestängen getragenen Traverse ist die gleichzeitige Prüfung in verschiedenen Ebenen des Brennelementes möglich. Eine zeitaufwendiges Verfahren einer Sonde in vertikaler Richtung, um nacheinander in verschiedenen Ebenen prüfen zu können ist nicht erforderlich.

Eine bevorzugte Ausgestaltung der Einrichtung sieht vor, daß das von dem Gehäuse abgewandte Ende der Drehdurchführung in eine Deckplatte geführt ist, die über Streben mit dem Gehäuse verbunden ist. Aufgrund der zusätzlichen Führung wird eine stabilisierte Ausbildung der Einrichtung erzielt.

Anhand eines Ausführungsbeispieles und einer Zeichnung wird die erfindungsgemäße Einrichtung beschrieben.

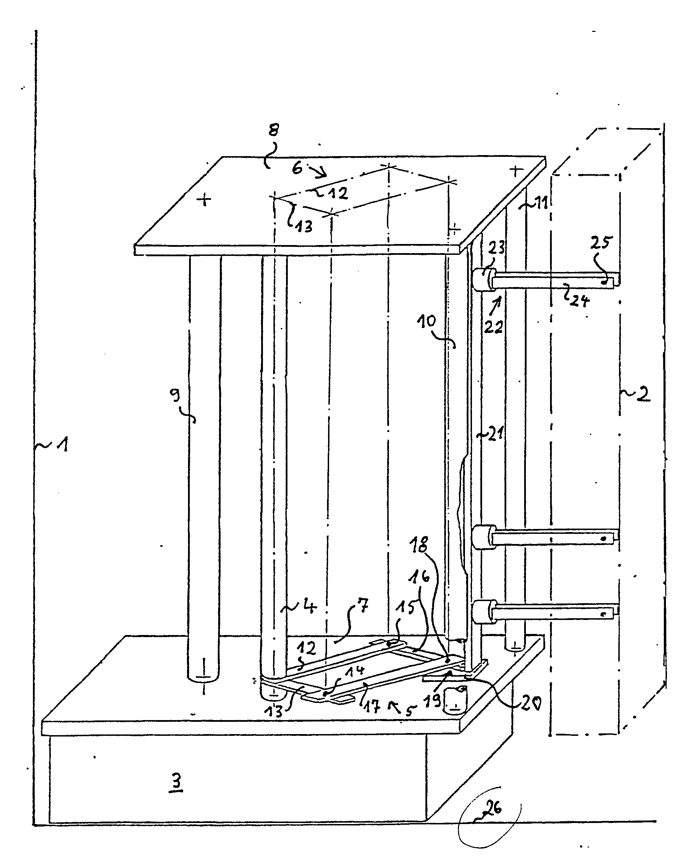

Die in der Zeichnung perspektivisch dargestellte Einrichtung ist in einem wassergefüllten Becken 1 auf einem nicht dargestellten Auflager abgestellt. Ein strichpunktiert angedeutetes Brennelement 2, das aus einer Vielzahl längserstreckter Brennstäbe besteht ist positionsgenau zur Einrichtung, in der Regel auf demselben Auflager, arretiert. Ein wasserdicht gekapseltes Gehäuse 3 enthält einen aus der DE-OS 33 37 084 bekannten Hebeltrieb. Eine Drehdurchführung 4, die die Umsetzung der Bewegung des Hebeltriebes auf eine außerhalb des Gehäuses 3 angeordnetes Hebelgestänge sicherstellt, erstreckt sich durch eine dem Boden 26 des Beckens 1 abgewandte Wand 7 des Gehäuses 3.

Der ca. vier Meter aus dem Gehäuse ragende Bereich der Drehdurchführung 4 ist etwa so lang wie das zu prüfende Brennelement. In der Nähe der Wand 7 und in der Nähe ihres freien Endes trägt die Drehdurchführung je ein spiegelbildlich ausgebildetes Hebelgestänge 5, 6. Zur Stabilisierung der Drehdurchführung ist ihr freies Ende in einer Deckplatte 8 geführt, die über drei Streben 9, 10 und 11 mit dem Gehäuse 3 verbunden ist. Die Bewegung der an der Drehdurchführung angelenkten Holmen 12, 13 des jeweiligen Hebelgestänges 5, 6 werden über die Drehgelenke 14, 15 und die Holme 16, 17 zu dem Drehpunkt 18 übertragen. Ein den Drehpunkt 18 durchsetzender Bolzen 19 ist in einer Tragplatte 20 drehbar gelagert, die ihrerseits mit dem Hebelgestänge 5, 6 verbunden ist. Zwischen den Tragplatten 20 erstreckt sich eine als Träger 21 ausgebildete Traverse 21, die an den Tragplatten 20 befestigt ist und führt somit die Bewegung der Hebelgestänge 5, 6 mit aus. Der Träger 21 nimmt auf verschiedenen Ebenen Sonden 22 auf, die etwa rechtwinklig von dem Träger 21 auskragen. Eine Sonde 22 besteht aus einem an dem Träger 21 lösbar befestigten Halter 23 und zwei Fingern 24, die an ihrem freien Ende einen Ultraschallprüfkopf 25 tragen. Durch die Verwendung eines als Traverse ausgebildeten Trägers 21 kommt die Einrichtung mit zwei Hebelgestängen aus, obwohl dieser Träger mehr als zwei Sonden tragen kann.

Mit einer einzigen Fahrbewegung in die Räume zwischen den Brennstäben werden die Brennstäbe auf drei Ebenen gleichzeitig geprüft. Eine Sondenbewegung in Richtung der Längserstreckung des Brennelementes ist nicht erforderlich.

## Patentansprüche

1. Einrichtung zur Inspektion eines Kernreaktor-Brennelementes (2) mit einem in die Räume zwischen den längserstreckten Brennstäben einfahrbaren, von einer Sonde (22) getragenen Ultraschallprüfkopf (25) und mit einem in einem wassergefüllten Becken (1) angeordneten gekapselten Gehäuse (3) zur Aufnahme eines Hebeltriebes zur Bewegung der außerhalb des Gehäuses angeordneten Sonde, wobei eine Drehdurchführung (4) eine Wand (7) des Gehäuses (3) durchdringt, die an ihrem außerhalb des Gehäuses angeordneten Ende mit einem Hebelgestänge (5,6) versehen ist, das einen Träger (21) zur Aufnahme der Sonde (22) aufweist, dadurch gekennzeichnet, daß die Drehdurchführung (4) das Gehäuse (3) in Richtung der Wasseroberfläche des Beckens (1) durchsetzt, daß von dem in das Wasser ragenden Teil der Drehdurchführung (4) zwei in verschiedenen Höhen angeordnete Hebelgestänge (5, 6) auskragen, daß der Träger (21) eine Traverse ist, die den freien Enden der Hebelgestänge (5,6) zugeordnete Tragplatten (20) miteinander verbindet und daß der Träger (21) mehrere auf verschiedenen Ebenen angeordnete Sonden (22) aufnimmt.

2. Einrichtung nach Anspruch 1, dadurch gekennzeichnet, daß das von dem Gehäuse (3) abgewandte Ende der Drehdurchführung (4) in einer Deckplatte (8) geführt ist, die über Streben (9, 10, 11) mit dem Gehäuse (3) verbunden ist.

## Claims

1. Apparatus for the inspection of a nuclear reactor fuel assembly (2) with an ultrasonic test head (25) which is carried by a probe (22) and can be inserted into the spaces between the longitudinally extending fuel rods, and with an encapsulated housing (3) which is arranged in a water-filled basin (1) and is for accommodating a lever drive mechanism for the movement of the probe arranged outside the housing, a rotary transmission (4) passing through a wall (7) of the housing (3), which rotary transmission is provided at its end arranged outside the housing with a lever linkage (5, 6), which has a carrier (21) for receiving the probe (22), characterised in that the rotary transmission (4) goes through the housing (3) in the direction of the water surface of the basin (1), in that two lever linkages (5, 6), arranged at different heights, jut out from the part of the rotary transmission (4) protruding into the water, in that the carrier (21) is a tie-bar which interconnects the carrying plates (20) assigned to the free ends of the lever linkages (5, 6) and in that the carrier (21) receives a plurality of probes (22) arranged at various levels.

2. Apparatus according to Claim 1, characterised in that the end of the rotary transmission (4) remote from the housing (3) is guided in a cover plate (8), which is connected to the housing (3) via struts (9, 10, 11).

## Revendications

1. Dispositif pour l'inspection d'un assemblage combustible (2) d'un réacteur nucléaire comprenant un palpeur à ultrasons (25) monté sur une sonde (22) pouvant être introduit dans les espaces entre les barres de combustible allongées et une enceinte (3) étanche, placée dans une cuve (1) remplie d'eau, et qui reçoit un mécanisme à levier pour le déplacement de la sonde placée à l'extérieur de l'enceinte, un arbre de commande (4), muni à son extrémité située à l'extérieur de l'enceinte d'un système de levier (5, 6), qui présente un support (21) recevant la sonde (22), traversant une paroi (7) de l'enceinte (3), caractérisé en ce que l'arbre de commande (4) sort de l'enceinte (3) en direction de la surface de l'eau de la cuve (1), en ce que deux systèmes de levier (5, 6) font saillie sur la partie de l'arbre de commande (4) faisant saillie dans l'eau, en ce que le support (21) est une traverse, qui relie entre elles des plaques supports (20) placées aux extrémités libres des systèmes de levier (5, 6) et en ce que le support (21) reçoit plusieurs sondes (22) disposées à des niveaux différents.

2. Dispositif selon la revendication 1, caractérisé en ce que l'extrémité de l'arbre de commande (4) éloignée de l'enceinte (3) est guidée dans une plaque supérieure (8) qui est reliée à l'enceinte (3) par l'intermédiaire de montants (9, 10, 11).